(19) **Europäisches Patentamt**
**European Patent Office**
**Office européen des brevets**

(11) **EP 4 538 737 A1**

(12) **EUROPEAN PATENT APPLICATION**

(43) Date of publication:
**16.04.2025 Bulletin 2025/16**

(21) Application number: **24205217.3**

(22) Date of filing: **08.10.2024**

(51) International Patent Classification (IPC):
**G01S 7/481** (2006.01)

(52) Cooperative Patent Classification (CPC):
**G01S 7/4816**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.10.2023 US 202363589091 P**

(71) Applicant: **MacDonald, Dettwiler and Associates
Inc.
Brampton, Ontario L6Y 6K7 (CA)**

(72) Inventor: **Zhu, Xiang
Brampton, Ontario, L6Y 6K7 (CA)**

(74) Representative: **Grünecker Patent- und
Rechtsanwälte
PartG mbB
Leopoldstraße 4
80802 München (DE)**

(54) **OPTICAL SYSTEM, METHOD, AND DEVICE TO INCREASE LIDAR DYNAMIC RANGE**

(57) A lidar device, and a system for improving the dynamic range performance of a lidar sensor is provided. The Light Detection and Ranging sensor system comprises: a laser transmitter (410), configured to transmit a laser beam to a target object; a receiving optics apparatus, further comprising: a receiving lens (420) configured to receive a returning beam from the target object and focus the returning beam from the target object to a detector (430); an optical lidar dynamic control lens (450) placed on a section of the receiving lens, wherein a part of the returning beam from the target object traverses through the optical lidar dynamic control lens, and the optical lidar dynamic control lens configured to focus the returning beam from the target object to a detector; and the detector, configured to receive the returning beam from the receiving optics apparatus to measure a range between the sensor system and the target object.

**FIG. 4**

## Description

## Technical Field

The following relates generally to lidar sensors, and more particularly to devices, systems, and methods for improving the dynamic range performance of a lidar sensor.

## Introduction

Lidar sensors operate on the principles of Light Detection and Ranging (LIDAR) technology. Lidar technology provides remote sensing capabilities to examine target objects at a range. A lidar sensor emits a laser beam and measures object range by measuring time of flight (TOF) or measuring phase change of the returning beam bounced back by a target.

Lidar sensors are used to measure distances form target objects and create three-dimensional representations on target objects including Earth's surface and physical structures. Other applications of lidar sensors include atmospheric studies such as measuring wind speed, temperature, and particle concentrations at various altitudes; topographical surveys such as generating high precision elevation data and creating landscape models, and meteorology. Lidar technology and sensor advancements have enhanced the applications of lidar to new areas including driverless cars, mining, wildlife conservation, and disaster management.

In space operations, lidar sensors have become indispensable in space missions for measuring object range or distance and generate 3D image of target objects. Lidar sensors have also been used in space exploration such as mapping surface of celestial objects, natural satellites, and planets. In navigation operations, lidar sensors have been used by space missions in spaceship docking and rendezvous, satellite service, and space debris removal. Lidar sensors have also been used for landing operations on the Moon, Mars, and the asteroids.

The common approaches to increase the lidar range add complexity, volume, and mass to the lidar systems and sensors. The approaches also require a higher number of components, thereby increasing damage risks and costs.

For space applications, the lidar systems are required to meet a range requirement with lowest complexity, and improved MVP (mass, volume, and power) performance.

Standard methods to extend lidar range includes installing two separated lidar sensors. One of the lidar sensors is configured to operate for long range, and the other lidar sensor operates for short range. An alternative method is to install two laser transmitters in one lidar sensor, wherein one laser has a high Launch Pulse Peak Power, and the other laser has a comparatively lower lidar Launch Pulse Peak Power compared to the first lasers. The two lasers can also be installed in a lidar system with two receiving paths and two detectors.

Yet another standard method of extending the lidar range is to install two sets of receivers in a lidar system, including one high sensitivity receiver and another low sensitivity sensor. Each receiver includes receiving optics and a photodetector.

Accordingly, there is a need for improved lidar devices, systems, and methods for improving the dynamic range performance of a lidar sensor that overcome at least some of the disadvantages of existing systems and methods.

## Summary

An optical light detection and ranging ("lidar") dynamic control device is provided. The device includes a receiving lens configured to receive a returning beam from a target object and focus the returning beam from the target object to a detector; and an optical lidar dynamic control lens placed on a section of the receiving lens, wherein a part of the returning beam from the target object traverses through the optical lidar dynamic control lens, and the optical lidar dynamic control lens is configured to focus the returning beam from the target object to the detector.

The optical lidar dynamic control lens may be configured as a freeform optics component.

The optical lidar dynamic control lens may include a continuous contour of optical surface.

The design of the optical lidar dynamic control lens may be based on a plurality of parameters including any two or more of required minimum range, separation between receiving aperture and laser beam, receiving aperture size, and laser beam size.

The optical lidar dynamic control lens may include a lens array of a plurality of lenslets, wherein each of the plurality of lenslets focus a point source along the returning beam to the detector.

The sub-aperture of the plurality of lenslets focus may provide a sufficient area to collect light.

The receiving lens may include a hole to receive the optical lidar dynamic control lens.

The optical lidar dynamic control lens may overlap the section of the receiving lens.

A light detection and ranging ("lidar") sensor system is provided. The sensor system includes a laser transmitter, configured to transmit a laser beam to a target object; a receiving optics apparatus, comprising: a receiving lens configured to receive a returning beam from the target object and focus the returning beam to a detector; an optical lidar dynamic control lens placed on a section of the receiving lens, wherein a part of the returning beam from the target object traverses through the optical lidar dynamic control lens, and the optical lidar dynamic control lens configured to focus the returning beam from the target object to the detector; and the detector, configured to receive the returning beam from the receiving optics apparatus to measure a range between the lidar sensor system and the target object.

The optical lidar dynamic control lens may be configured as a freeform optics component.

The optical lidar dynamic control lens may include a continuous contour of optical surface.

The design of the optical lidar dynamic control lens may be based on a plurality of parameters including any two or more of required minimum range, separation between receiving aperture and laser beam, receiving aperture size, and laser beam size.

The optical lidar dynamic control lens may include a lens array of a plurality of lenslets, wherein each of the plurality of lenslets focus a point source along the returning beam to the detector.

The sub-aperture of the plurality of lenslets focus may provide a sufficient area to collect light.

The receiving lens may include a hole to receive the optical lidar dynamic control lens.

The optical lidar dynamic control lens may overlap the section of the receiving lens.

Other aspects and features will become apparent, to those ordinarily skilled in the art, upon review of the following description of some exemplary embodiments.

**Brief Description of the Drawings**

The drawings included herewith are for illustrating various examples of articles, methods, and apparatuses of the present specification. In the drawings:

Figure 1 is a schematic diagram of a lidar system 100 in a monostatic optic configuration;

Figure 2 is a schematic diagram of a lidar system 200 in a bistatic optic configuration;

Figure 3 is a graphical plot of return power versus range for monostatic optics, bistatic optics, and bistatic in accordance with the present disclosure;

Figure 4 is a schematic diagram of a lidar system with an optical lidar dynamic control (OLDC) device, according to an embodiment;

Figure 5 is a schematic diagram illustrating calculations of power levels of the returning light beams on a lidar system with an OLDC device, according to an embodiment;

Figure 6 is a schematic diagram illustrating a comparison of a conventional circular lens and a Freeform Optics (FFO) lens, according to an embodiment;

Figure 7 is a schematic diagram of an OLDC device on a receiving lens, according to an embodiment;

Figures 8A and 8B are schematic diagrams of two configurations for an OLDC device, according to an embodiment; and

Figure 9 is a graphical plot of return power versus range from a lidar with bistatic optics with OLDC, according to an embodiment.

**Detailed Description**

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to lidar sensors, and more particularly to devices, systems, and methods for improving the dynamic range performance of a lidar sensor.

The systems and methods of the present disclosure may increase returned optical signal level for any type of lidar, such as lidars measuring object range by measuring time of flight (TOF) or measuring phase change of the returning beam bounced back by a target. In some cases, the present disclosure may be applied in heterodyning lidars or photon-counting lidars.

A lidar sensor generally includes various components responsible for transmitting, receiving, and processing the light signals used in lidar measurements. The major components of a lidar sensor include:

(a) A Laser Beam Generator: To generate a beam of light directed towards the target. The light may correspond to different wavelengths based on the nature of target and the type of incident light.

(b) Transmitting Optics: A variety of lenses or mirrors that shape and direct the laser beam towards the target.

(c) Scanning Mechanism: A mirror or a prism that moves in a prescribed pattern to scan the laser beam across the target area.

(d) Receiving Optics: A variety of lenses or mirrors that collect the reflected light from the target object and direct it towards a detector. The size and design of these optics can affect the amount of light that is collected and the resolution of the measurements.

(e) Photodetector: A device for converting the received light into an electrical signal or data to measure range and map the target object. The sensitivity of the detector to the wavelength of the laser light and the strength of the returned signal can influence the performance of the LiDAR system.

(f) Optical Filters: Components to block out light beams of unwanted wavelengths to improve accuracy of measurements.

(g) Beam Splitters and Dichroic Mirrors: Components to separate or combine beams of different wavelengths.

The receiving optics in a lidar sensor collect a variety of return light beams from the target objects, given the various ranges of the targets. This occurs especially in diffusive targets that scatter the incoming light in many directions.

The maximum range of a lidar sensor refers to the furthest distance at which the lidar the sensor can effectively detect and accurately measure target objects.

The maximum range is determined by the following lidar equation:

$$P(P \geq P_t) \propto P_0 \times \rho \times \frac{A}{R^2}$$

In the equation, $P$ is the peak power of the lidar returned signal i.e., the highest power level of the reflected laser pulse detected by the lidar sensor. The lidar sensor measures the power level and time of the returned signal to determine the distance and mapping of the diffusive target object. Diffusive target objects return light beams at lower power level compared to the light beams returned from specular target objects. $P$ is measured in Watts (W).

$p$ is the Reflectance of the diffusive target. Reflectance refers to the ratio of the laser light reflected off the target object over the incident laser light. The reflected light may propagate in all directions, while only a fraction of the reflected light may be received by the lidar sensor.

$P_t$ refers to the Lidar Receiver Threshold. The Lidar Receiver Threshold is the minimum power level of the return light beam that can be detected by the lidar receiver. The lidar receiver may by dynamically adjusted based on the operating conditions, to avoid ambient light and detect the return light beams accurately. $P_t$ is measured in Watts (W).

$P_0$ is the Lidar Launch Pulse Peak Power. The Lidar Launch Pulse Peak Power is the maximum power output of the laser pulse when first emitted from the lidar sensor. The lidar sensor's maximum range and resolution is directly linked to Lidar Launch Pulse Peak Power. $P_0$ is measured in Watts (W). The maximum range R is proportional to the square root of the LIDAR Launch Pulse Peak Power for a diffusive target. With high lidar peak power, a higher resolution is provided in general. However, an accurate and detailed relationship between the lidar peak power and the resolution depends on a specific design.

$A$ is the Area of Receiving Optical Aperture i.e., the area of the detector or the receiving optical lens that captures the reflected light signals from the target.

$R$ is the Range or the distance between the lidar sensor and the target object. The returned power level of the light beam is proportional to inverse root square of the distance between the sensor and the target object.

To increase the range of a lidar sensor, the Lidar Launch Pulse Peak Power ($P_0$) may be increased. However, this increment may lead to heating of the laser and other components of the lidar sensor. Therefore, additional measures may be required to manage the heat and operation of the system.

Further, to increase the range of a lidar sensor, the Area of Receiving Optical Aperture (**A**) may be increased. However, this may increase the size and weight of the lidar sensor, making it difficult to transport and deploy. Furthermore, larger Area of Receiving Optical Aperture (**A**) may introduce optical aberrations, thereby decreasing the quality of measurements.

Disclosed herein is an optics solution for a lidar sensor system. The lidar sensor system includes an optics solution to manage an [extremely high] dynamic range by controlling an amount of return light beam onto a lidar detector depending on target range. As a result, range performance of the lidar sensor system is improved by means of a simpler and less complicated lidar sensor system.

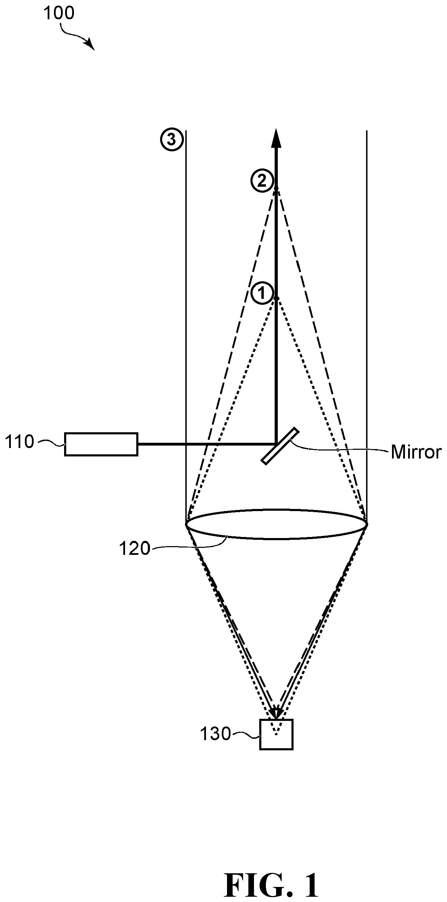

Referring now to Figure 1, shown therein is a lidar system 100 in a monostatic optic configuration.

In a monostatic optic configuration, a laser emitter and an incoming beam receiver share the same optical path. Therefore, the laser beam is launched from the lidar system, and a returning laser beam are co-aligned. A lens 120 is part of the receiving optics. The laser 110 emits an outgoing laser beam from the lidar system. For illustration, three target objects 1, 2, and 3 are shown. The target objects are located at varying distances on the path i.e., Target Object 1 is located at a distance nearer to the receiving optics; Target Object 2 is located at a distance further than the Target Object 1; and Target Object 3 is located at the farthest distance compared to both Target Object 1 and Target Object 2.

When the outgoing laser beam hits the target object, the light is reflected, refracted, or scattered, depending on the properties of the target and the wavelength of the laser beam. A returning laser beam is received by the lens that focuses the returning laser beam to a detector 130. The laser spot on target is imaged onto a receiving detector regardless of target range.

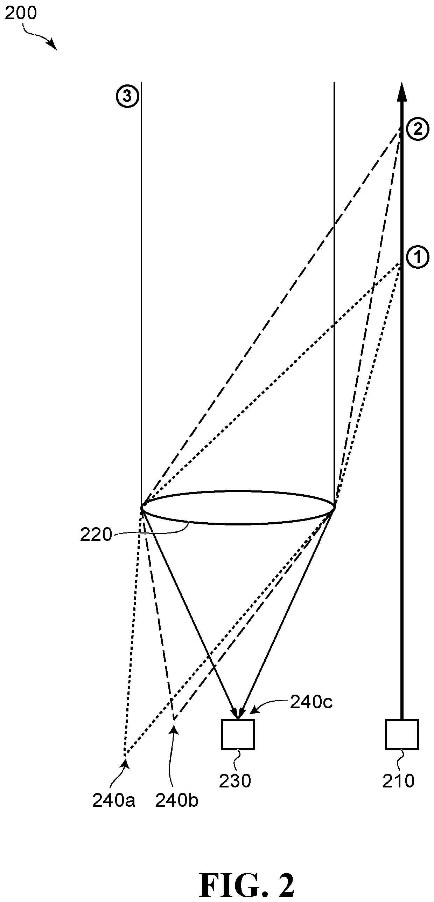

Referring now to Figure 2, shown therein is a lidar system 200 in a bistatic optic configuration.

In a bistatic optic configuration, a laser emitter and an incoming beam receiver are physically separated and do not share the same optical path. Therefore, a laser beam launched from the lidar system, and a returning laser beam are not co-aligned and follow a different path. A lens 220 is part of the receiving optics. A laser 210 emits an outgoing laser beam from the lidar system. For illustration, three target objects 1, 2, and 3 are shown. The target objects are located at varying distances on the path i.e., Target Object 1 is located at a distance nearer to the receiving optics; Target Object 2 is located at a distance further than the Target Object 1; and Target Object 3 is located at the farthest distance compared to both Target Object 1 and Target Object 2.

When the outgoing laser beam hits the target object, the light is reflected, refracted, or scattered, depending on the properties of the target and the wavelength of the laser beam. A returning laser beam is received by the lens that focuses the returning laser beam to the detector 230. The laser spot on target is imaged onto a receiving detector regardless of target range.

In a bistatic lidar system, the power level of the returning laser beam from targets at short distance (Target Object 1 and Target Object 2) is reduced. This occurs because the image spot 240a and 240b of the laser spot on target objects is shifted away from the detector due to triangulation effect. As a result, the image spot of the laser beam is only partially on the detector compared to a monostatic system, leading to power loss. Further, the image spot 240a and 240b are unfocused and larger than the detector on the focal plane where the detector locates compared to a monostatic system, leading to further power loss. The APD (Avalanche Photodiode) detector in a lidar system is usually very small (<200$\mu$m), in order to be fast enough for pulse detection.

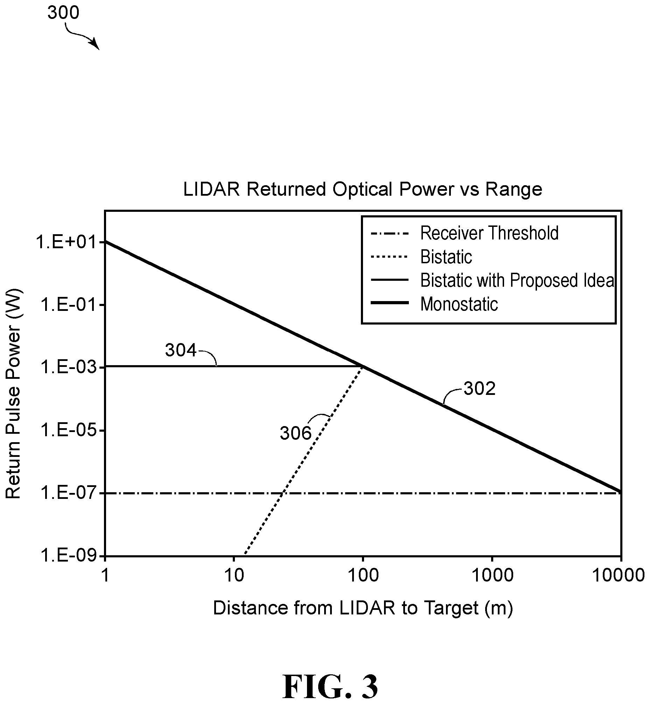

Referring now to Figure 3, shown therein is a graphical plot 300 of return power versus range for monostatic optics, bistatic optics, and bistatic in accordance with an embodiment of the present disclosure.

In a monostatic lidar system 302, the power level of the returning light shows a linear reduction with the increasing distance between the target object and the lidar system when plotted in logarithmic scale. The power reduction is from 10W to $10^{-7}$W for a distance from 1m to 10000m.

The graphical plot 300 is provided for illustration purposes with a specific lidar peak power, area of receiving aperture, and target reflectance. According to an embodiment, the straight line in log scale is true for a diffusive target. The most common targets may be modeled as diffusive targets from the so-called Lidar equation. There is no general equation for other type of targets such as retro-reflectors. From 10W to 10-7W, the decrease is 10E-8 times in the return pulse power, where it is decided by 1/(R^2), that is (1/10000^2)=10E-8.

In a bistatic lidar system 304, the power level of the returning light remains substantially constant when the distance between the lidar system and the target is between approximately 1 m to over 100m. The curve 302 for the monostatic case is mathematically correct, under the assumption that the image spot is on the APD, and smaller than APD in this test case, and the whole return light collected by the lens is received by the APD. The curves 304 and 306 below 100m are approximated for illustration purposes. Over 100m, the triangulation effect is small, and the curves 304 and 306 nearly overlap with the curve 302.

This occurs because the location of image spot 240c is formed on the detector. However, a steep decline in the power level of returning beam is observed for distances less than 100m. This occurs because the image spots 240a and 240b are not formed on the detector.

The shift of the image spots 240a and 240b is determined by property of the circular collection lens 220. Extensive shifts occur as the distance between the lidar system and the target object approaches zero. In the present graph, the power level of the returning light beam is observed at below the lidar receiver threshold level for distanced below 30m to 40m. As a result, the bistatic lidar system cannot report range values for distances lower than 30m to 40m. Since the power level of the returning laser beam in reduced by inversed root square of the distance between the lidar sensor and the target object, the incoming laser spot size and target range, traditional circular optics do not offer a degree of freedom to manage the return power lever over full range.

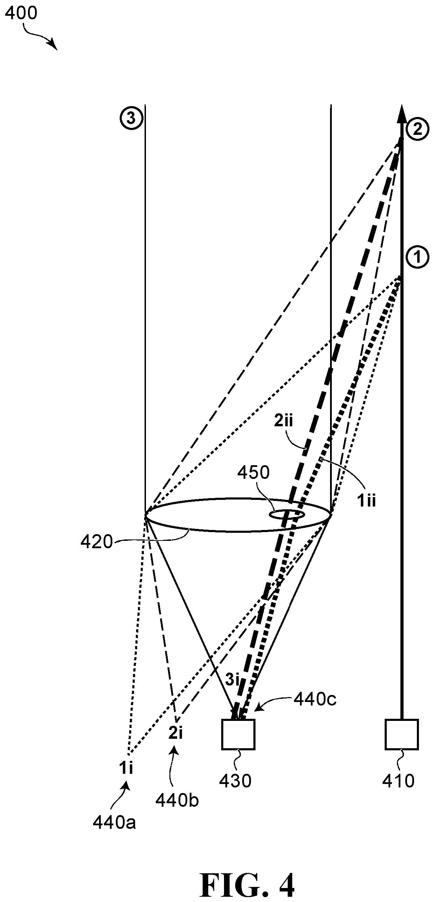

Referring now to Figure 4, shown therein is a lidar system with an Optical Lidar Dynamic Control (OLDC) device, according to an embodiment.

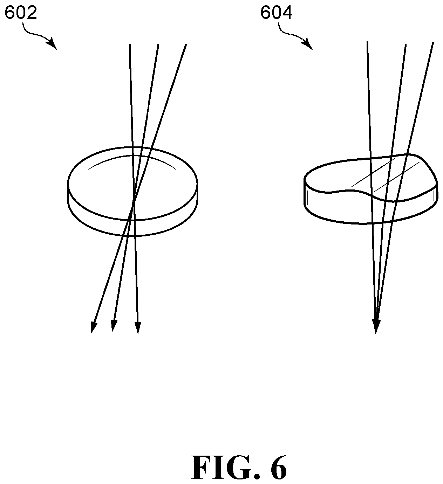

OLDC device 450 may be either attached or separately mounted to a main receiving lens 420 as part of a receiving optics. As used herein, the term "circular" generally refers to the shape in which a lens is cut. For example, the two lenses in Figure 6 are both cut into a circular shape but have different surface profiles. The terms "spherical", "aspherical" and "cylindrical" are used to describe lens surface profile. In an embodiment, the receiving lens 420 is a spherical lens or an aspherical lens (we used both in practical implementation). The cylindrical lens has a surface shape resembling a cylinder. The cylindrical lens may be cut into a rectangular shape. The cylindrical lens may be cut into a circular shape. In an embodiment, the receiving lens 420 may perform as the main receiving lens. The receiving lens 420 may also be referred to herein as lenslet (or lenslet 420).

In an embodiment, the OLDC device 450 covers a section of the receiving lens 420. Preferably, the most area of the receiving lens 420 is unaffected to collect the return light beam from far target objects and focus return light beam 440c on detector 430. For light beams returning from closer targets, the OLDC device 450 modifies the direction of returning optical rays to focus the rays on the detector 430.

As shown in Figure 4, the returning laser beams (1i and 2i) from the nearer target objects i.e., Target Object 1 and Target Object 2 are formed on the receiving lens 420, and the image spots 440a and 440b are focused outside of the detector 430. By means of the OLDC device 450, returning laser beams (1ii and 2ii) are formed on device 450. As a result, image spots 440c are focused on the detector 430 despite returning from different target object distances.

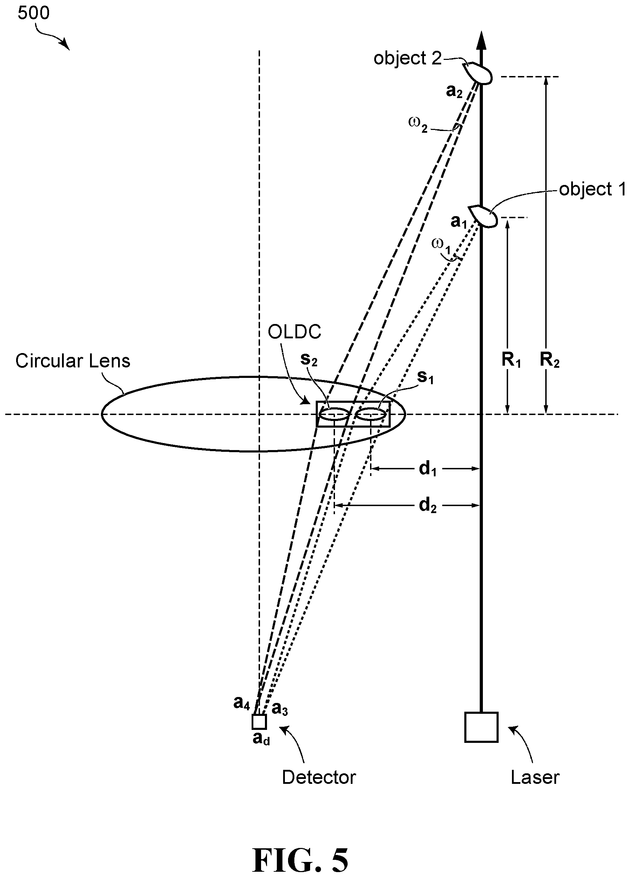

Referring now to Figure 5, shown therein are calculations of power levels of the returning light beams on a lidar system with an OLDC device (e.g., OLDC device 450 of Figure 4), according to an embodiment.

$P1$ and $P2$ refer to the optical power fall on two optical sub-aperture $s1$ and $s2$ on the OLDC device after the returning laser beam hits two target objects (Target Object 1 and Target Object 2).

The laser return power $P1$ and $P2$ are functions of many parameters including the launched laser power $P0$, laser spot on the objects ($a1$ and $a2$), objects' BDRF (bi-directional reflection function) $BDRF1$ and $BDRF2$, the ranges of the objects $R1$ and $R2$, the horizontal distance $d1$ and $d2$, and solid angles of $\omega1$ and $\omega2$ opened by $s1$ and $s2$.

According to an embodiment, $P1$ and $P2$ may be presented as functions of other parameters as $P1=f(P0, R1, d1, a1, s1, BORF1, \omega1)$; and $P2=f(P0, R2, d2, a2, s2, BDRF2, \omega2)$.

According to an embodiment, if the sub-aperture $s1$ and $s2$ of the OLDC image, the laser spot $a1$ and $a2$ on the focal plane as the imaging spots of $a3$ and $a4$, the relation between the laser spots and the imaging spots may be linked by defining an imaging transfer function $H$. The imaging transfer function $H$ transfers the laser spots in object space to the image spots on the imaging plane of the optics. The imaging transfer function $H$ depends on surface shape and material property of the optics of the sub-aperture. If the imaging transfer function of the sub-aperture $s1$ and $s2$ are $H1$ and $H2$, $a3$ and $a4$ may be expressed as $a3 = H1(a1)$ and $a4=H2(a2)$. If the detector's surface $ad$ is located on the focal plane at ($x_0$ and $y_0$), the received power $P3$ and $P4$ by the detector from laser spot $a1$ and $a2$ may be expressed as the $P1$ and $P2$ times the 2D convolution function between spots of $ad$ and $a3$; and $ad$ and $a4$, also expressed as $P3 = P1 \times \int\int ad(x - x0, y - y0) * a3(x, y)dxdy$ and $P4 = P2 \times \int\int ad(x - x0, y - y0) * a4(x, y)dxdy$, where function of $ad$ is 1 where position is inside the detector, 0 where position is outside of the detector.

Referring now to Figure 6, shown therein is a comparison of a conventional spherical lens 602 and a Freeform Optics (FFO) lens 604, according to an embodiment.

Traditional optics such as a spherical lens 602 includes translational or rotational symmetry. The traditional optics may not provide sufficient degree of freedom in this case where an optimized design is constrained by many parameters. The traditional optics may not keep the return light focused on a small detector when the laser spot on a target object moves along the range direction. In recent years, advances in design, fabrication, and testing have allowed Freeform Optics (FFO), such as implemented in FFO lens 604, to emerge as a practical way to achieve performance that cannot be offered by conventional optics. The OLDC can be designed and fabricated as a FFO component to achieve an optimized performance.

To achieve a nearly constant return power at close range, a continuous contour of optical surface provided by freeform optics (FFO) is necessary for designing the OLDC. A variety of algorithms are developed to design FFO optics. According to an embodiment, for the Optical Lidar Dynamic Control (OLDC), a design preferably depends on a plurality of parameters including required minimum range, separation between receiving aperture and laser beam, receiving aperture size, and laser beam size.

In an embodiment, the dimension of the main receiving lens is determined by the maximum range requirement, such that when $P=Pt$, $R$ is equal to range maximum $Rmax$. For given $P0$ and $Pt$, the dimension of the main receiving lens is decided by $A$ (area of the circular lens). In an embodiment, the area of the FFO lens should not be more than a few percent, such as less than 5 to 10% of the area of the main receiving lens, since the return light reflected from a far target will not be focused on the detector by the FFO lens. Since the FFO lens works on the reflected light from near targets, a small size (e.g. less than 5% of the main receiving lens area) may be sufficient for the design. In general, an optimized FFO lens size and location will depend on specific requirements for each sensor, but the FFO design principle remains the same.

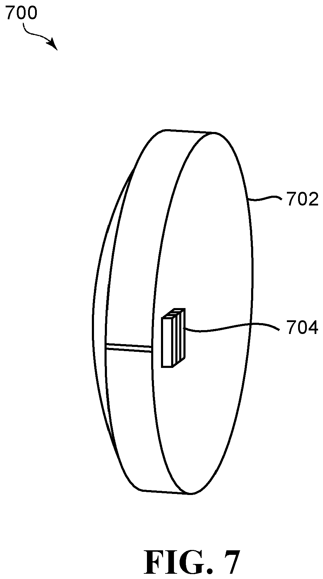

Referring now to Figure 7, shown therein is side perspective view 700 of a main receiving lens 702 having an OLDC device 704 thereon, according to an embodiment. The OLDC device 704 may be the OLDC device 450 of Figure 4.

In an embodiment, the OLDC device 704 is an array of cylindrical lenses placed within the main receiving lens 702. The OLDC may be an array of cylindrical lenses, or a free-form optics. Further, the OLDS may be an array of spherical or aspherical lenses too, however, the spherical or aspherical lenses may not perform optimally as the collected light falling on the detector may be weak. The OLDC itself doesn't include any part of the main receiving lens, when it is attached to the main receiving lens, its design has to consider the optical power of the main receiving lens to provide the final required function.

According to an embodiment, the OLDC device 704 refers to a lens array or a plurality of lenses including multiple small spherical lenses. Each small spherical lens focuses a point source onto the detector along the line that connects the laser beam spot and the detector center. This picture is only true if each spherical lens is small, such as less than 200 $\mu$m in diameter. If not, there is not enough space for all spherical lenses that image the laser spots that are generated at different locations when target range varies, onto the detector. In this case, the aperture of each lens is very small, such as 0.1 mm diameter aperture (or 0.0314mm$^2$), and the collected light that falls on the detector is too small to be practice useful. In a real design, each sub-aperture of the OLDC has sufficient area to collect adequate light. The goal of a design is to have adequate and nearly constant return power falling on the detector as shown in Figure 2 (curve 304) when a laser spot with finite size moves along the range direction. The power on the detector is kept nearly constant since a finite imaged spot moves in and out of a detector (e.g., 200$\mu$m in diameter) when the laser spot moves along the range direction.

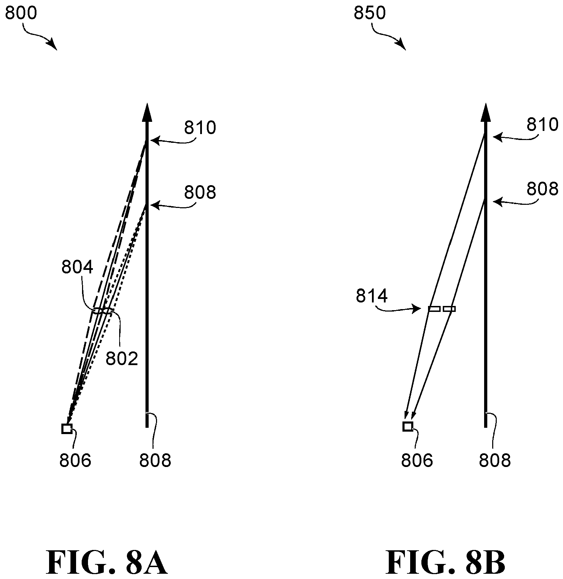

Referring now to Figures 8A and 8B, shown therein are two configurations 800, 850 for an OLDC device, such as OLDC device 450 of Figure 4 or OLDC device 704 of Figure 7, according to an embodiment. Each configuration includes laser beam 808.

In a first configuration 800 shown in Figure 8A, the OLDC device is located at the area where the main receiving lens is absent, i.e., there is a hole on the main receiving lens for the OLDC. In an embodiment, the OLDC device is placed outside the main receiving lens.

In a second configuration 850 shown in Figure 8B, the OLDC device (e.g., 704 of Figure 7A) is mounted onto the main receiving lens (704 of Figure 7). In this configuration, the optical transfer function of the OLDC device should be designed to include the optical transfer function of the main receiving lens at that location in order to achieve its function. A description of the working of the free form optics (FFO) in the design, according to an embodiment, is provided. Examining the concept with more symmetrical optics, i.e., an array of spherical lenslets including spherical lenslet 1 802 and spherical lenslet 2 804 or aspherical lenslets as the way to make the detector 806 receive reflected light from target 1 808 and target 2 810 as shown in Figures 8A and 8B. In a spherical or an aspherical lens, the focus point is along a line that connects a source to its center. Two lenslets 802, 804 are shown in Figure 8A. The light cone from target 1 808 hits the detector 806 with its center ray passing the center of the circular lenslet 1 802 of Figure 8A. The light cone from target 2 810 hits the detector 806 with its center ray passing the center of the lenslet 2 804. However, the light cone from target 2 810 does not hit the detector 806 if the center of the light cone passes the center of the lenslet 1 802. To receive reflected light from all points between target 1 808 and target 2 810, many lenslets are required to replace lenslet 1 802 and lenslet 2 804, which may make the area of each lenslet small (e.g., diameter less than a few hundreds of microns). Since the light received by the detector 806 is proportional to area of each lenslet, the amount of light received does not produce sufficient electrical signal.

However, as shown in Figure 8B, if the lenslets 802, 804 are replaced by less symmetrical optics, e.g., an array of cylindrical lenses 814, more design freedom is allowed. This also allows to get more light on the detector 806. In a cylindrical lens 814, it focuses light into a line along its long direction. The lens 814 may have a much larger height (in the direction out of the paper) to collect more light from a larger surface. In Figure 8B, light reflected between target 1 808 and target 2 810 is focused into a line that is slightly long than the detector 806 dimension. Further, the width of the line controlled by the radius of the cylindrical lens 814 is also slightly wider than the detector 806 dimension. As a result, the detector 806 receives sufficient light from targets in any position from target 1 808 to target 2 810. In a FFO design, a smooth contour of its surface may be considered for a surface including multiple cylindrical lenses 814. One of cylindrical lenses 814 may give optimized length and width of the imaging line that covers the detector 806, depending on the distance of one target section between target 1 808 and target 2 810.

It should be noted that the above discussion assumes the main receiving lens is absent. If the FFO is mounted on the main receiving lens, its surface needs to include optical power to cancel the optical focusing power from the main circular lens, in addition to its optical function discussed above.

The free form optics (FFO) may not have translational or rotational symmetry making them difficult to design, manufacture, and verify using conventional techniques. According to an embodiment, an array of conventional optical components may be used as segments to approximately function of a free form optics based OLDC device. According to an embodiment, an array of cylindrical lenses is used for this purpose, wherein each cylindrical lens focuses the light from laser spots in a certain range (e.g., 1m to 2m, 2m to 10m, 10m to 100m) on the detector with some overlapped imaging spots. The cylindrical lenses may be designed with a variety of parameters (curvature and size) to maintain the collected return power is nearly constant at close range as expected from a free form optics based OLDC device.

One cylindrical lens may be designed to collect reflected light from one range section (e.g., 1m to 2m). In an embodiment, the lens shape and size are designed to produce a line that is overlapped with the detector. The linewidth of the line is preferably slightly larger than the detector size (e.g., 200μm). The length of the line may be just long enough to cover the detector, in order to minimize the optical loss. Multiple cylindrical lenses may be used for different range sections. The total area taken by the cylindrical lens array is preferably kept under a few percent of the total area of the main receiving lens, in order to minimize the impact on the lidar maximum range.

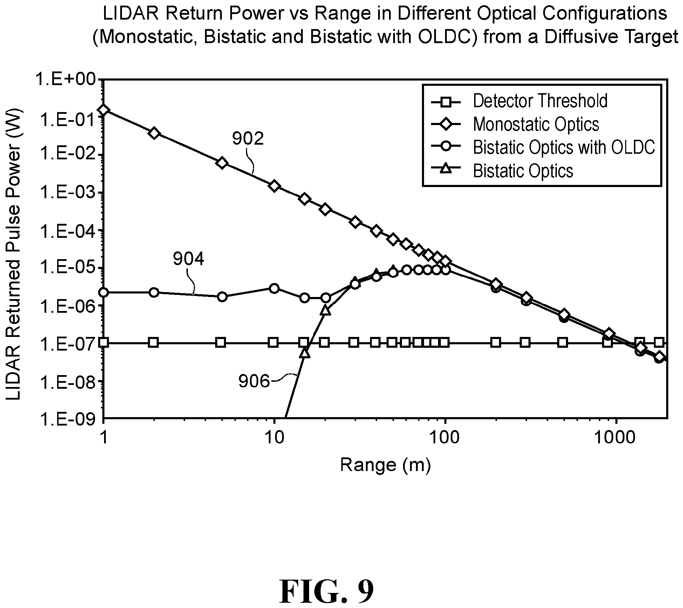

Referring now to Figure 9, shown therein is a graphical plot of return power versus range from a lidar with bistatic optics and OLDC, according to an embodiment.

All the curves 902, 904, and 906 are recorded for diffusive targets at a range up to 2000 meters. A diffusive target reflects light in all directions, and it is a good estimation for most common objects. It can be modeled easily without needing specific details. The curve 902 in the log-log scale represents the return power versus range for a lidar with monostatic optics. In the present case, the returned power from a diffusive target is inversely proportional to the range square. The return power is above the detector threshold (shown as the curve 906) over 1km range. At 1 meter, the return optical power is 1 million times higher than the return optical power at 1000m from the inverse square of the ratio $(1000m/1m)^2$, or the detection threshold. This variation is usually over the dynamic range of the detector electronics, which may cause issues for a lidar to work at close range or report accurate range measurement.

The curve 906 is the return power from bistatic optics. The third line shows the bistatic optics collects the similar amount of light as one from the monostatic optics at far range. However, at close range, the triangulation (or parallax) effect causes the returned imaging spot falling off the detector. Therefore, the bistatic lidar can have the same maximum range of 1km, but it can't detect objects less than 15m. The curve 904 shows the return power from the bistatic optics with the OLDC. In this case, the designed OLDC keeps the return power nearly constant from 1m to 20m, and it keeps the return power within 20dB from 1m to 1000m, compared to 60dB in the case of the monostatic optics.

The OLDC device controls the amount of return light falling on the lidar detector depending upon target ranges, as compared with designs using dual laser transmitters (high power and low power) or a split return beam directed onto two detectors.

The OLDC device provides a bistatic lidar system with a smaller mass, size, and power consumption while maintaining performance.

The OLDC device may be implemented in a bistatic lidar architecture which overcomes the short-range weakness of a bistatic optical path while preserving the backscatter robustness of a bistatic optical path.

The system of the present disclosure uses a lidar working in a bistatic optical configuration. An example of such a scanning bistatic lidar is United States Patent Application US20140078514 Wide-Angle Bistatic Scanning (WABS) lidar.

The systems and methods of the present disclosure may be applicable to lidars that need to have short minimum range (e.g., 1 meter) to very long range (e.g., 1 kilometer). The systems and methods of the present disclosure may be implemented in space applications, such as landing lidars and rendezvous and docking lidars.

While the above description provides examples of one or more apparatus, methods, or systems, it will be appreciated that other apparatus, methods, or systems may be within the scope of the claims as interpreted by one of skill in the art.

**Claims**

1. An optical light detection and ranging ("lidar") dynamic control device, the device comprising:

   a receiving lens configured to receive a returning beam from a target object and focus the returning beam from the target object to a detector; and
   an optical lidar dynamic control lens placed on a section of the receiving lens, wherein a part of the returning beam from the target object traverses through the optical lidar dynamic control lens, and the optical lidar dynamic control lens is configured to focus the returning beam from the target object to the detector.

2. The device of claim 1, wherein the optical lidar dynamic control lens is configured as a freeform optics component.

3. The device of claim 1, wherein the optical lidar dynamic control lens includes a continuous contour of optical surface.

4. The device of claim 1, wherein a design of the optical lidar dynamic control lens is based on a plurality of parameters including any two or more of required minimum range, separation between receiving aperture and laser beam, receiving aperture size, and laser beam size.

5. The device of claim 1, wherein the optical lidar dynamic control lens includes a lens array of a plurality of lenslets, wherein each of the plurality of lenslets focus a point source along the returning beam to the detector.

6. The device of claim 5, wherein each sub-aperture of the plurality of lenslets focus provides a sufficient area to collect light.

7. The device of claim 1, wherein the receiving lens includes a hole to receive the optical lidar dynamic control lens.

8. The device of claim 1, wherein the optical lidar dynamic control lens overlaps the section of the receiving lens.

9. A light detection and ranging ("lidar") sensor system, the sensor system comprising:

   a laser transmitter, configured to transmit a laser beam to a target object;
   a receiving optics apparatus, comprising:

      a receiving lens configured to receive a returning beam from the target object and focus the returning beam to a detector;
      an optical lidar dynamic control lens placed on a section of the receiving lens, wherein a part of the returning beam from the target object traverses through the optical lidar dynamic control lens, and the optical lidar dynamic control lens configured to focus the returning beam from the target object to the detector; and
      the detector, configured to receive the returning beam from the receiving optics apparatus to measure a range between the lidar sensor system and the target object.

10. The sensor system of claim 9, wherein:

    the optical lidar dynamic control lens is configured as a freeform optics component; or
    the optical lidar dynamic control lens includes a continuous contour of optical surface.

11. The sensor system of claim 9, wherein a design of the optical lidar dynamic control lens is based on a plurality of parameters including any two or more of a required minimum range, a separation between receiving aperture and laser beam, a receiving aperture size, and a laser beam size.

12. The sensor system of claim 9, wherein the optical lidar dynamic control lens includes a lens array of a plurality of lenslets, wherein each of the plurality of lenslets focus a point source along the returning beam to the detector.

13. The sensor system of claim 12, wherein each sub-aperture of the plurality of lenslets focus provides a sufficient area to collect light.

14. The sensor system of claim 9, wherein the receiving lens includes a hole to receive the optical lidar dynamic control lens.

15. The sensor system of claim 9, wherein the optical lidar dynamic control lens overlaps the section of the receiving lens.

**FIG. 1**

200

③

②

①

220

240c

230

240a 240b

230

210

FIG. 2

300

LIDAR Returned Optical Power vs Range

FIG. 3

400

③

②

①

2ii

450

1ii

420

3i

440c

2i

430

410

1i

440a

440b

# FIG. 4

**FIG. 5**

602 604

# FIG. 6

700

702

704

**FIG. 7**

800

810

808

804

802

806    808

**FIG. 8A**

850

810

808

814

806    808

**FIG. 8B**

LIDAR Return Power vs Range in Different Optical Configurations (Monostatic, Bistatic and Bistatic with OLDC) from a Diffusive Target

**FIG. 9**

Europäisches
Patentamt

European
Patent Office

Office européen
des brevets

# EUROPEAN SEARCH REPORT

**Application Number**

EP 24 20 5217

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S59 92372 A (NIPPON SOKEN) 28 May 1984 (1984-05-28)<br><br>* the whole document * | 1,3,4, 7-11,14, 15 | INV. G01S7/481 |
| X | DE 10 2016 208713 A1 (IFM ELECTRONIC GMBH [DE]) 23 November 2017 (2017-11-23) * paragraph [0015] - paragraph [0027]; figures 1,2 * | 1-4, 8-11,15 | |
| X | DE 10 2021 108096 A1 (SICK AG [DE]) 6 October 2022 (2022-10-06) * paragraph [0036] - paragraph [0041]; figure 1 * | 1,3-6, 9-13 | |

|  |
|---|
| **TECHNICAL FIELDS SEARCHED (IPC)** |
| G01S |

The present search report has been drawn up for all claims

| Place of search | Date of completion of the search | Examiner |
|---|---|---|
| Munich | 25 February 2025 | Kaleve, Abraham |

EPO FORM 1503 03.82 (P04C01)

## ANNEX TO THE EUROPEAN SEARCH REPORT
## ON EUROPEAN PATENT APPLICATION NO.

EP 24 20 5217

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2025

| Patent document cited in search report | Publication date | Patent family member(s) | | Publication date |
|---|---|---|---|---|
| JP S5992372 A | 28-05-1984 | JP | H0153752 B2 | 15-11-1989 |
| | | JP | S5992372 A | 28-05-1984 |
| DE 102016208713 A1 | 23-11-2017 | NONE | | |
| DE 102021108096 A1 | 06-10-2022 | DE | 102021108096 A1 | 06-10-2022 |
| | | EP | 4067931 A1 | 05-10-2022 |

For more details about this annex : see Official Journal of the European Patent Office, No. 12/82

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140078514 A